# FASCICULE DE BREVET EUROPEEN

(11) **EP 3 362 661 B1**
(45) Date de publication et mention de la délivrance du brevet: **15.02.2023**
(21) Numéro de dépôt: 16790529.8
(22) Date de dépôt: 14.10.2016
(51) Int. Cl.: F02D 9/10, F02M 35/10, F16K 27/02, F16K 37/00

(54) **VANNE MOTORISÉE INSTRUMENTÉE**
INSTRUMENTIERTES MOTORISIERTES VENTIL
INSTRUMENTED MOTORISED VALVE

(30) Priorité: 16.10.2015 FR 1559907
(43) Date de publication de la demande: 22.08.2018
(73) Titulaire: MMT SA, 6304 Zug (CH)
(72) Inventeur: MELLERE, Cédric, 25190 Soulce Cernay (FR); BROSSARD, Olivier, 25470 Fessevillers (FR); GATEFAIT, Stéphane, 90100 Saint Dizier L'Evêque (FR)
(74) Mandataire: IP Trust
(86) Numéro de dépôt international: PCT/EP2016/074670
(87) Numéro de publication internationale: WO 2017/064236

(56) Documents cités:
- EP-A2- 1 099 939
- EP-A2- 1 298 299
- WO-A1-2014/072605
- DE-A1-102013 101 302
- JP-A- 2003 176 731
- US-A1- 2012 240 898

## Description

### DOMAINE TECHNIQUE DE L'INVENTION

L'invention se rapporte au domaine des vannes motorisées et plus particulièrement aux vannes motorisées instrumentées. Ces vannes motorisées dites instrumentées comportent des interfaces permettant l'intégration et la fixation de capteurs d'état du système tels que des capteurs de position, de température, de pression.

De manière spécifique mais non limitative, l'invention concerne le domaine particulier des vannes motorisées instrumentées s'intégrant sur un moteur à combustion. Ces vannes, constituées principalement d'un conduit de forme sensiblement tubulaire dans lequel se trouve un clapet d'obturation apte à fermer plus ou moins le conduit, sont présentes dans de nombreuses applications industrielles, notamment automobiles, où elles interviennent dans la régulation de fluide, essentiellement au niveau de la boucle d'air du moteur à combustion du côté admission et du côté échappement. Le clapet d'obturation est lié via un arbre de transmission à un actionneur de type électromagnétique conçu pour déplacer et positionner correctement le clapet dans le conduit entre une première position extrême correspondant à une ouverture maximum du conduit et une deuxième position extrême correspondant à une fermeture maximum du conduit, avec un niveau d'étanchéité donné.

Afin d'assurer une mise en position précise et adaptée au régime de fonctionnement, l'actionneur de la vanne motorisée est piloté par l'intermédiaire d'un calculateur qui reçoit et analyse en temps réel les informations émanant de différents capteurs. Ces capteurs peuvent être intégrés dans l'actionneur et sur le moteur thermique en amont, en aval ou directement sur la vanne motorisée à piloter. Les éléments sensibles de ces capteurs, notamment pour la mesure de température et de pression d'un fluide, sont généralement en contact physique avec le fluide, pour réaliser ainsi une mesure directe des paramètres à suivre.

Ces vannes motorisées instrumentées peuvent, selon les niveaux de température et de sollicitations mécaniques de l'application, être fabriquées en métal ou en plastique. L'intégration et la fixation de ces différents capteurs sur des vannes réalisées en aluminium est assez simple : ce métal peut être facilement moulé pour obtenir le volume, la forme grossière de la vanne qui est reprise dans un deuxième temps en usinage pour réaliser les interfaces de fixation des capteurs, généralement débouchant à l'intérieur du conduit de la vanne. Pour les vannes réalisées en plastique, l'intégration et la fixation des capteurs est réellement problématique car d'une part les thermoplastiques injectés se reprennent très mal en usinage et d'autre part les effets de retrait de matière interdisent toute agglomération volumineuse et massive de plastique (comme des pavés destinés à être usinés par la suite). Les formes complexes des vannes et des interfaces de fixation des capteurs sont également problématiques pour une fabrication en plastique : elles conduisent souvent à des outillages / moules d'injection compliqués comportant de nombreux mouvements pour réaliser et démouler ces éléments, ces outillages étant très onéreux, compliqués, peu fiables et difficiles à entretenir.

### ETAT DE LA TECHNIQUE ANTERIEURE

L'état actuel de la technique offre différentes solutions pour la fabrication de vannes comportant des capteurs.

A titre d'exemple, la demande de brevet EP1099939 de la société Pierburg revendique l'intégration d'un capteur de débit massique sur la conduite de retour des gaz d'échappement, en amont de la vanne EGR. La conduite de retour des gaz d'échappement comprend également un refroidisseur des gaz. Le capteur de débit massique se compose de deux corps de chauffe et de deux capteurs de température, le capteur de débit massique et la vanne EGR formant une seule pièce. Cette demande de brevet présente également une solution pour la fixation du capteur de débit massique sur la vanne EGR au niveau d'un conduit métallique accolé à la vanne EGR. Les corps de chauffe et les capteurs de température, formant le capteur de débit massique, sont vissés sur des supports rapportés et fixés à la conduite métallique ; ils traversent la paroi pour pénétrer à l'intérieur du conduit et sont maintenus en position par des contre écrous. Ce type d'intégration présente de nombreux inconvénients : d'une part le conduit accolé à la vanne doit être métallique et relativement épais pour permettre la fixation par vissage et contre écrou des capteurs sur les supports rapportés, induisant ainsi une solution relativement lourde et encombrante. D'autre part, les capteurs se retrouvent positionnés à une distance significative de l'élément mobile de la vanne, induisant ainsi un certain décalage entre le comportement des gaz au niveau de la vanne et le comportement des gaz au niveau des capteurs. Enfin et compte tenu de la solution proposée, il convient de réaliser une double étanchéité entre premièrement le conduit et les supports rapportés permettant le maintien des capteurs, et deuxièmement entre les éléments supports rapportés et les capteurs.

On connait par ailleurs la demande de brevet US20080155962 de la société Siemens VDO Automotive décrivant une vanne doseuse d'admission pour véhicule comprenant un élément de vanne mobile entre deux positions dans une conduite de gaz d'échappement, un actionneur pour déplacer l'élément de vanne mobile et un système de capteur comprenant au moins un capteur de température et / ou un capteur de pression, les capteurs étant intégrés en amont ou en aval de l'élément de vanne. Le signal émis par ces capteurs permet de définir les conditions de fonctionnement de la vanne doseuse, notamment la position de l'élément de vanne mobile par l'intermédiaire d'un contrôleur. Une solution d'intégration est également proposée : les capteurs de température et pression intégrés dans la conduite des gaz d'échappement sont électriquement connectés au contrôleur localisé dans l'enveloppe de l'actionneur déplaçant l'élément de vanne mobile. Ce brevet présente les capteurs de façon schématique et ne propose aucune solution concernant la manière de les intégrer et de les fixer sur la conduite ou sur la vanne doseuse. La structure proposée est également très massive : le conduit métallique, les différentes pièces supports nécessaires à la fixation de l'actionneur sur la vanne, la solution d'accouplement de l'axe de l'actionneur à l'axe de la vanne conduisent à une solution très lourde et encombrante.

On connait alors, dans l'état de la technique, le brevet CN2844459 de la société Hongwei Science and Technology qui propose un dispositif de commande électronique pour moteur intégré comprenant un capteur de température de l'air d'admission, un capteur de pression de l'air d'admission et un capteur angulaire de la vanne doseuse. Le dispositif de commande électronique est directement installé sur la conduite des gaz, permettant ainsi et simultanément les fonctions de détection par les capteurs et de contrôle du papillon de la vanne doseuse. Ce brevet apporte une solution innovante pour l'intégration du dispositif de commande électronique sur la conduite des gaz mais il ne donne aucun détail sur la manière de positionner et fixer les différents capteurs.

On connait aussi le brevet DE102013101302 de la société Wahler Gmbh qui propose une vanne comportant un boîtier formant une partie de la conduite des gaz d'échappement, un clapet d'obturation dans la conduite des gaz, le clapet étant déplaçable par un actionneur électromagnétique. La vanne intègre également un capteur de position du clapet d'obturation et un capteur de température des gaz d'échappement, les deux capteurs étant reliés entre eux par une interface électrique commune sous forme de pistes de métal conducteur (leadframe en anglais). Le capteur de température est ici un composant propre de la vanne, il est positionné et protégé à l'intérieur du système d'actionnement et ne vient donc pas en contact direct avec le fluide. Il s'agit ici d'une mesure de la température d'une zone de la conduite métallique du fluide et non une mesure directe de la température du fluide, le capteur étant logé dans une niche non débouchant de la conduite, l'élément sensible du capteur n'étant pas en contact avec le fluide.

On connait également la demande de brevet WO2012060965 de la société Caterpillar qui revendique un système de contrôle d'une machine intégrant un moteur à combustion, le système de contrôle comprenant une vanne, un moteur lié à la vanne pour l'ouvrir et la fermer, un capteur de température apte à fournir un signal de température et un contrôleur recevant le signal de température et envoyant le courant nécessaire au moteur. Cette demande de brevet apporte une bonne solution pour le pilotage d'un moteur de commande de vanne à partir d'informations venant d'un ou plusieurs capteurs de température mais il ne donne aucun détail sur la manière de positionner et fixer les différents capteurs.

La demande de brevet WO2014072605 de la société Sonceboz Automotive SA revendique une vanne motorisée associant un actionneur électromagnétique selon les demandes WO9211686 et WO2007012711 à une matière surmoulant plastique formant au moins en partie la tubulure de la vanne et solidaire en partie de l'actionneur. Malgré la pertinence de ce type de solution, via notamment le très faible encombrement et la très faible masse des systèmes proposés, des problèmes persistent. Ces demandes ne proposent aucune solution pour intégrer des capteurs à proximité de la vanne plastique, ces brevets ne proposent également aucune solution pour la réalisation d'outillage d'injection complexe permettant de gérer le surmoulage de l'actionneur, la réalisation de la conduite des gaz, l'intégration des interfaces pour les capteurs et la réalisation des interfaces mécaniques de fixation de la vanne sur l'application.

La demande de brevet EP1298299 décrit un dispositif d'étranglement comprenant un boîtier à plusieurs composants, dans lequel un papillon des gaz est disposé et actionné à l'aide d'un entraînement de réglage. Une première partie de boîtier présentant différentes brides est disposée sur un boîtier de base réalisé sous forme de pièce moulée par injection et recevant le papillon des gaz, et une autre partie de boîtier est montée mobile sur le boîtier de base. La deuxième partie du boîtier modifie l'alimentation en air. Caractéristiques préférées : Les première et deuxième parties du boîtier sont fabriquées à partir de pièces moulées par injection de plastique ou de matériaux métalliques. Un élément de mesure de la masse d'air à film chaud est intégré dans la première partie du boîtier. La première partie du boîtier comporte des manchons de guidage qui s'étendent d'une section en forme de plaque parallèle à la direction du flux d'air à travers une section d'écoulement.

La demande de brevet EP1099939 décrit un capteur de masse d'air, qui est disposé directement dans la conduite de recirculation des gaz d'échappement en amont de la soupape de recirculation des gaz d'échappement. Un refroidisseur de gaz d'échappement peut être intégré dans la conduite de recirculation des gaz d'échappement. La soupape et le capteur de gaz d'échappement peuvent être formés comme une unité intégrée. Le capteur peut comprendre deux capteurs de chaleur et deux capteurs de température, reliés à deux ponts de Wheatstone.

La demande de brevet WO2014/072605 décrit une vanne motorisée composée d'un tube obturable, d'un obturateur de vanne, d'un actionneur électromagnétique rotatif et d'une matière plastique de surmoulage, ledit actionneur étant formé d'un ensemble stator, d'un rotor fixé à une broche, l'obturateur étant positionné progressivement par ledit actionneur à l'aide de la broche et pouvant obturer le tube, la matière plastique de surmoulage entourant et étant fixée au moins en partie à l'actionneur et formant au moins en partie le tuyau, caractérisé en ce que l'étanchéité statique est assurée par la matière plastique de surmoulage commune à l'actionneur et au tuyau, ladite matière de surmoulage étant traversée par un passage rendu étanche pour le guidage de la broche qui relie l'obturateur et le rotor.

Enfin, le document JP2003176731 décrit un dispositif d'étranglement installé avec un moteur d'actionnement, un capteur de position (TPS), et un capteur de débit d'air (AFS). Les directions des cordons reliant les bornes de connexion du moteur, du TPS et de l'AFS aux cordons électriques externes coïncident. Un couvercle en résine recouvrant le TPS est muni d'un boîtier de connexion qui contient la borne de connexion du moteur et la borne de connexion du TPS en une seule pièce. Le boîtier du moteur a une forme conique dans laquelle un diamètre d'alésage sur un côté de l'orifice d'insertion est plus grand qu'un diamètre sur le côté arrière, et un bouchon est en contact avec la périphérie d'un couvercle d'extrémité du moteur pour supprimer un jeu radial du moteur. Un mécanisme maintenant une ouverture initiale d'étranglement des gaz est prévu dans le corps avec une vis de réglage.

### INCONVENIENTS DE L'ART ANTERIEUR

L'art antérieur offre ainsi de nombreuses solutions dont aucune n'est réellement satisfaisante pour la réalisation d'une vanne motorisée instrumentée intégrant des capteurs.

Les solutions proposées par l'art antérieur induisent un positionnement des éléments sensibles des capteurs relativement éloigné de la vanne ou du fluide s'écoulant à travers la conduite. Les capteurs ne sont alors pas suffisamment proches de la vanne pour permettre l'envoi de données fiables et précises au contrôleur de la vanne.

Les solutions proposées amènent souvent des problèmes d'encombrement et de masse pour fixer et intégrer les différents capteurs sur la vanne motorisée, notamment par les choix de matières et solutions de fixation retenus.

La combinaison des différentes solutions proposées pour obtenir une vanne motorisée de faible encombrement, de faible masse, avec des capteurs positionnés à proximité amène à des outillages et moules d'injection bien trop complexes pour être industrialisables et fiables en production série.

### EXPOSE DE L'INVENTION

L'objet de l'invention est ainsi de répondre aux problèmes exposés précédemment en proposant une vanne motorisée instrumentée permettant l'intégration de capteurs d'état du système en contact direct avec le fluide et à proximité de la vanne, dans un encombrement réduit, sans induire de prise de masse significative, la vanne motorisée instrumentée selon l'invention étant facilement réalisable par des opérations et des outillages simples et conventionnels.

A cet effet et dans son acceptation la plus générale, l'invention concerne une vanne motorisée instrumentée comportant un corps de vanne en matière plastique, ledit corps de vanne formant un conduit, ladite vanne comportant un actionneur apte à déplacer un élément d'obturation dans ledit conduit, ledit corps de vanne intégrant également des interfaces pour la fixation de capteurs d'état du système, lesdits capteurs d'état étant en contact direct avec le fluide circulant dans ledit conduit, ledit corps de vanne intégrant aussi des éléments de fixation mécanique sur l'application, ledit corps de vanne étant constitué de deux enveloppes distinctes et complémentaires, une première enveloppe comportant ledit actionneur, ledit élément d'obturation, lesdits éléments de fixation mécanique de ladite vanne motorisée sur l'application et une partie de l'interface pour la fixation d'au moins un des capteurs d'état du système, une deuxième enveloppe comportant lesdits éléments de fixation mécanique de ladite vanne motorisée sur l'application et le reste des interfaces pour la fixation des capteurs d'état du système, ledit conduit étant en deux parties distinctes appartenant chacune à la première enveloppe et à la deuxième enveloppe.

Avantageusement, un élément apte à étanchéifier le conduit est placé à l'interface entre la première enveloppe et la deuxième enveloppe, l'élément d'étanchéité étant un joint de forme rapporté ou un élastomère appartenant à la deuxième enveloppe obtenu par un procédé de bi-injection.

Selon une variante, les éléments de fixation mécanique comportent des inserts métalliques traversant la première enveloppe et la deuxième enveloppe, les inserts métalliques étant rapportés et emmanchés dans la deuxième enveloppe ou surmoulés avec la deuxième enveloppe.

Selon un mode de réalisation particulier, la vanne motorisée instrumentée comporte au minimum deux interfaces pour la fixation d'au moins deux capteurs d'état du système, les interfaces pour la fixation des capteurs étant monoblocs et d'un seul tenant avec la deuxième enveloppe.

Selon une autre variante, une première interface pour la fixation d'un premier capteur est orientée selon une direction parallèle à l'axe du conduit, la lumière d'accès de la première interface de fixation au conduit étant orientée selon une direction orthogonale à l'axe du conduit.

Selon un mode de réalisation particulier, la première interface pour la fixation d'un premier capteur appartient en partie à la première enveloppe et en partie à la deuxième enveloppe.

Selon un autre mode de réalisation, la partie de la première interface pour la fixation d'un premier capteur appartenant à la première enveloppe est une excroissance localisée en périphérie du conduit, l'élément d'étanchéité réalisant également l'étanchéité de l'excroissance.

Selon une autre variante, une deuxième interface pour la fixation d'un deuxième capteur est orientée selon une direction orthogonale à l'axe du conduit, la lumière d'accès de l'interface de fixation au conduit étant orientée selon une même direction orthogonale à l'axe du conduit.

De préférence, la deuxième interface pour la fixation d'un deuxième capteur appartient intégralement à la deuxième enveloppe.

Selon une alternative, la deuxième interface pour la fixation d'un deuxième capteur intègre un insert métallique rapporté ou directement surmoulé avec la deuxième enveloppe, l'insert métallique comprenant un élément fileté.

L'invention concerne aussi un procédé pour la réalisation d'une vanne motorisée instrumentée, la deuxième interface pour la fixation d'un deuxième capteur comprenant un élément fileté réalisé par injection via un mouvement hélicoïdal de sortie de la broche de l'outillage.

L'invention concerne encore un procédé pour la réalisation d'une vanne motorisée instrumentée, la deuxième enveloppe étant réalisée par un outillage d'injection comportant deux directions principales de fermeture et d'ouverture, une première des directions principales étant l'axe du conduit, une deuxième des directions principales étant un axe définissant une des interfaces de fixation d'un capteur, les deux directions principales étant orthogonales.

### BREVE DESCRIPTION DES FIGURES

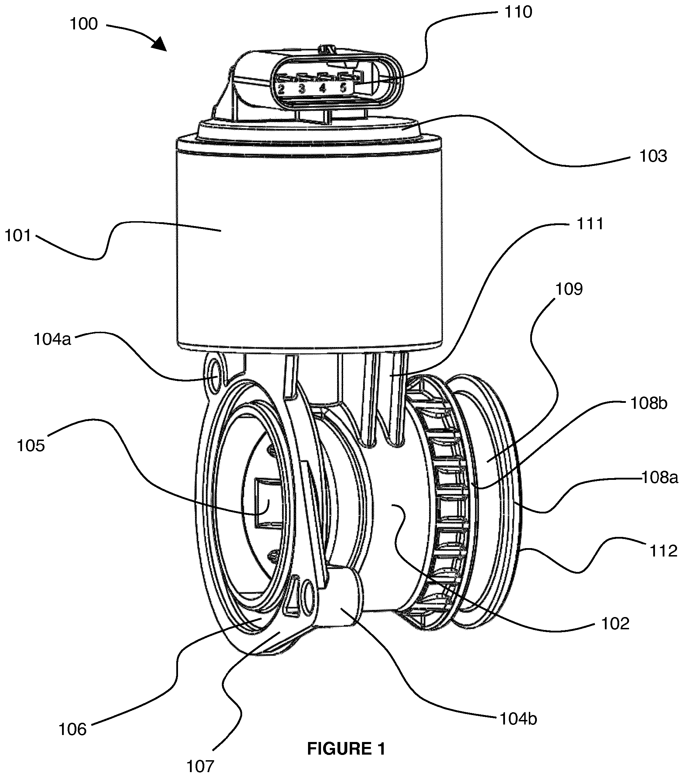

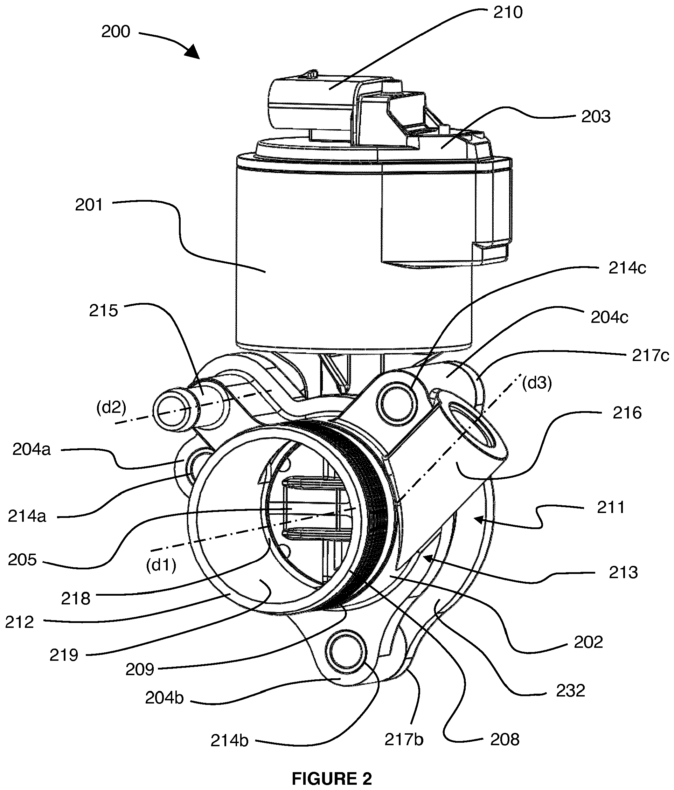

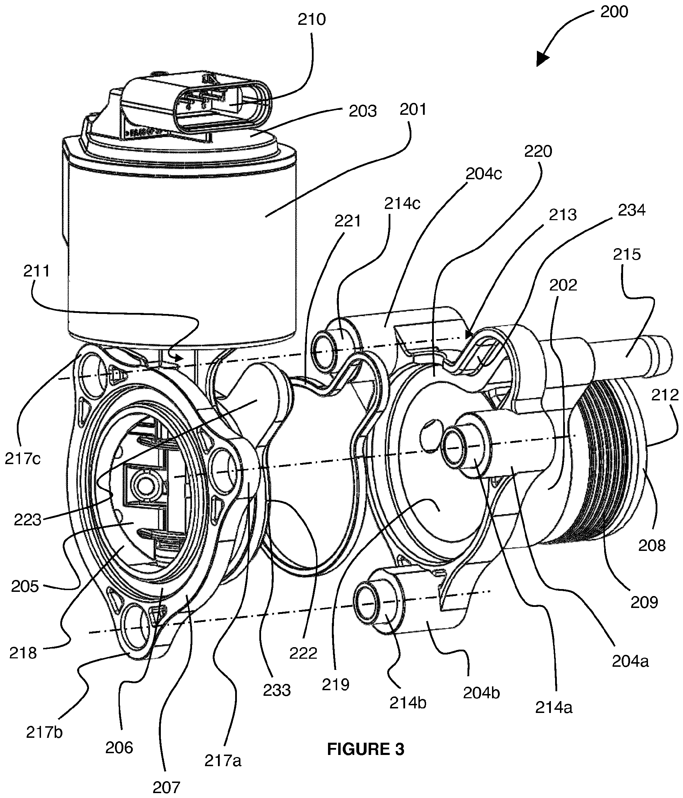

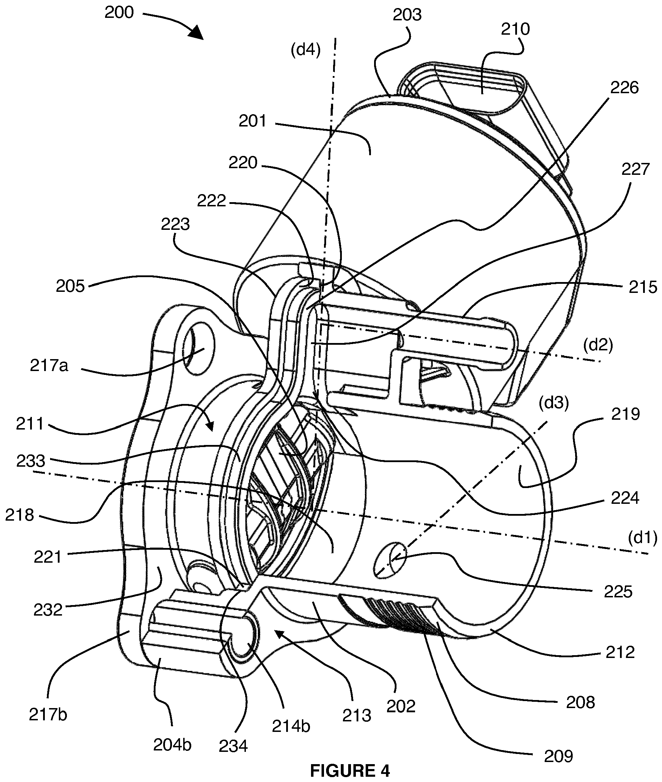

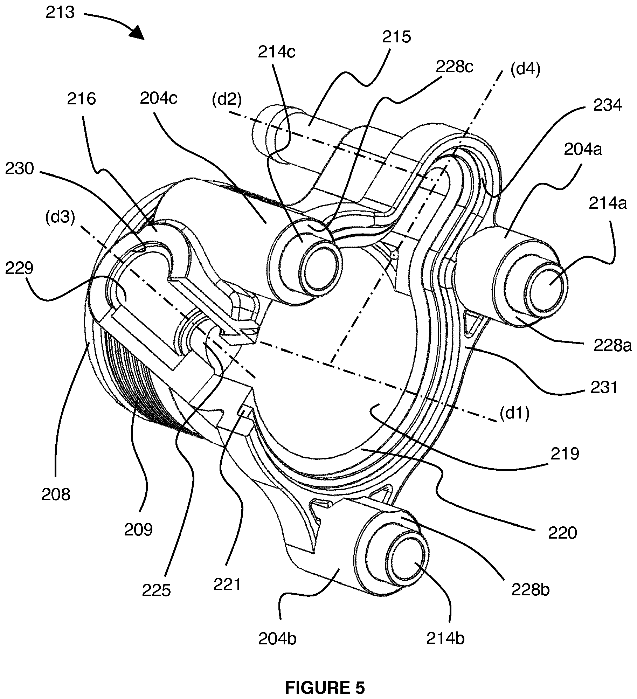

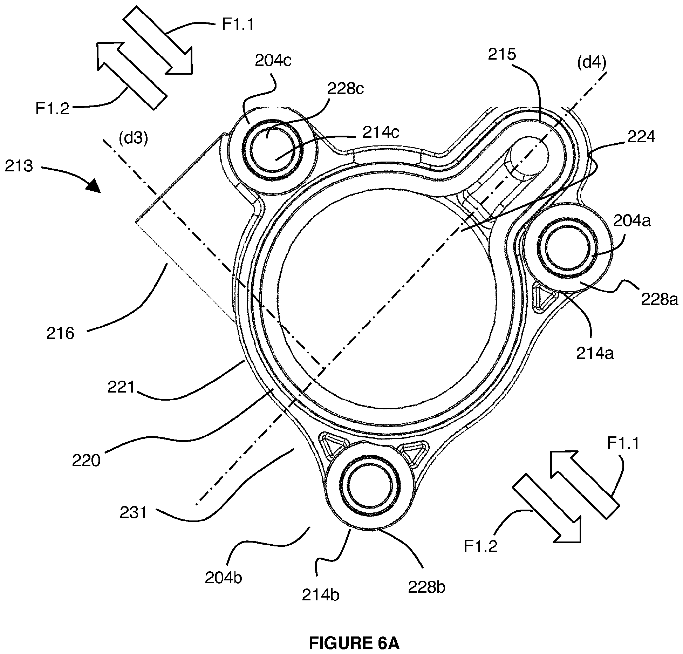

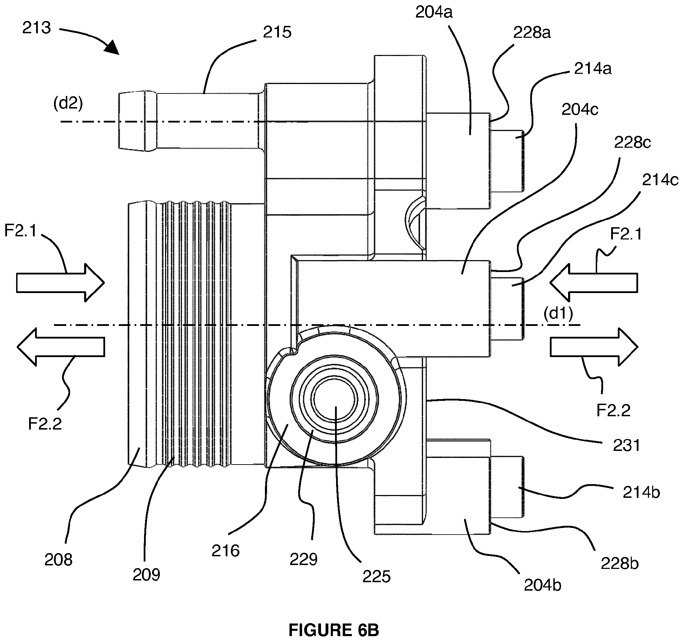

D'autres caractéristiques et avantages de l'invention ressortiront à la lecture qui suit d'exemples de réalisations détaillés, en référence aux figures annexées qui représentent respectivement :
**La** **figure 1****,** une vue de trois quart d'une vanne motorisée selon l'art antérieur,
**La** **figure 2****,** une vue de trois quart d'une vanne motorisée instrumentée selon l'invention,
**La** **figure 3****,** une vue de trois quart en éclatée d'une vanne motorisée instrumentée selon l'invention,
**La** **figure 4****,** une vue en coupe partielle d'une vanne motorisée instrumentée selon l'invention,
**La** **figure 5****,** une vue de trois quart en coupe partielle de la deuxième enveloppe d'une vanne motorisée instrumentée selon l'invention,
**La** **figure 6A****,** une vue de face de la deuxième enveloppe d'une vanne motorisée instrumentée selon l'invention,
**La** **figure 6B****,** une vue de côté de la deuxième enveloppe d'une vanne motorisée instrumentée selon l'invention,

### DESCRIPTION DETAILLEE DE L'INVENTION

La **figure 1** représente une vue de trois quart d'une vanne motorisée **100** selon l'art antérieur. La vanne motorisée **100** est constituée par un actionneur électromagnétique **101** associé à une conduite de gaz **102,** l'actionneur **101** et la conduite **102** formant un seul et même corps plastique **111** obtenu par surmoulage. La vanne motorisée **100** comporte un couvercle **103** permettant de fermer et protéger de manière étanche l'actionneur électromagnétique **101.** Le couvercle **103** intègre un connecteur **110** permettant de réaliser l'interface électrique avec l'application : le connecteur **110** apporte à l'actionneur **101** le courant nécessaire pour le déplacer et il fournit à l'application le signal d'un capteur de position (non visible sur la figure) intégré dans l'actionneur **101.**

La conduite de gaz **102** comporte un clapet d'obturation **105** mobile entre deux positions. Ce clapet **105** est directement déplacé par l'actionneur **101** qui fournit sa position angulaire à l'application par l'intermédiaire du capteur de position (non visible sur la figure) via le connecteur **110.** La conduite de gaz **102** comporte également à chacune de ses extrémités les interfaces de fixations mécaniques avec l'application sous la forme, à une première extrémité, d'oreilles de fixation **104a** - **104b** associées à une surface d'appui plane **107,** et sous la forme à une deuxième extrémité d'une portée cylindrique **108a** - **108b** associée à une surface d'appui plane **112.** La conduite de gaz **102** comporte enfin à une première extrémité une gorge axiale **106** et à une deuxième extrémité une gorge circonférentielle **109** permettant d'étanchéifier la fixation avec l'application, les gorges **106** et **109** recevant des joints toriques d'étanchéité (non représentés sur la figure).

La **figure 2** représente une vue de trois quart d'une vanne motorisée instrumentée **200** selon l'invention. La vanne motorisée instrumentée **200** se présente sous la forme d'un corps de vanne plastique constitué de deux enveloppes distinctes et complémentaires **211** et **213** définissant une conduite de gaz **202** selon un axe (d1).

La première enveloppe 211 comporte un actionneur électromagnétique 201 fermé de manière étanche par un couvercle 203 comprenant un connecteur 210 permettant de relier électriquement la vanne motorisée instrumentée 200 à l'application. Le connecteur 210 apporte à l'actionneur 201 le courant nécessaire pour le déplacer et il fournit à l'application le signal d'un capteur de position (non visible sur la figure) intégré dans l'actionneur 201. L'enveloppe 211 comporte également une partie 218 de la conduite des gaz 202 comprenant un clapet d'obturation 205 mobile entre deux positions. Ce clapet 205 est directement déplacé par l'actionneur 201 qui fournit sa position angulaire à l'application par l'intermédiaire du capteur de position (non visible sur la figure) via le connecteur 210. L'enveloppe 211 comprend aussi des moyens de fixation mécanique à l'application sous la forme d'oreilles plastiques 217a (non visible sur la figure) - 217b - 217c localisées en périphérie de la partie 218 de la conduite des gaz 202.

La deuxième enveloppe 213, complémentaire de la première enveloppe 211, comporte une partie 219 de la conduite des gaz 202, la partie 219 étant sensiblement coaxiale avec la partie 218 de l'enveloppe 211. La deuxième enveloppe 213 comporte également une première interface 215 pour l'intégration et la fixation d'un premier capteur d'état du système (non représenté sur la figure), un capteur de pression par exemple, la première interface 215 étant orientée selon un axe (d2) sensiblement parallèle à l'axe (d1) définissant la conduite des gaz 202. La deuxième enveloppe 213 comprend aussi une deuxième interface 216 pour l'intégration d'un deuxième capteur d'état du système (non représenté sur la figure), un capteur de température par exemple, la deuxième interface 216 étant orientée selon un axe (d3) sensiblement orthogonal à l'axe (d1) définissant la conduite de fluide 202. Les deux interfaces 215 et 216 pour l'intégration des capteurs d'état du système présentent un accès débouchant à l'intérieur de la conduite des gaz 202 au niveau de la partie 219, permettant ainsi aux éléments sensibles des capteurs (non représentés sur la figure) d'être en contact avec le fluide circulant à travers la conduite 202. L'enveloppe 213 comprend des moyens de fixation mécanique à l'application sous la forme d'oreilles plastiques 204a - 204b - 204c localisées en périphérie de la partie 219 de la conduite des gaz 202, les oreilles plastiques 204a - 204b - 204c étant respectivement coaxiales aux oreilles 217a - 217b - 217c de la première enveloppe 211 pour former des paires d'oreilles s'étendant selon une direction parallèle à (d1), chaque paire d'oreilles 204a/217a - 204b/217b - 204c/217c étant respectivement traversée par et associée à un insert métallique 214a - 214b - 214c participant au maintien, à la rigidité de l'ensemble et contribuant à reprendre les efforts induits après serrage des vis de fixation (non représentées sur la figure) traversant les paires d'oreilles 204a/217a - 204b/217b - 204c/217c. La deuxième enveloppe 213 comprend enfin une autre interface mécanique de fixation avec l'application sous la forme d'une portée cylindrique 208 associée à une portée striée 209 s'étendant selon une direction (d1) et une face d'appui plane 212.

La figure 3 représente, respectivement à la figure 2, une vue de trois quart en éclatée d'une vanne motorisée instrumentée 200 selon l'invention. La première enveloppe 211 est positionnée respectivement à la deuxième enveloppe 213 par les inserts métalliques 214a - 214b - 214c traversant respectivement les paires d'oreilles 217a/204a - 214b/204b - 217c/204c. Une fois assemblée, les deux enveloppes 211 et 213 définissent ensemble une conduite de gaz 202 s'étendant de la surface d'appui 207 à la surface d'appui 212 par l'intermédiaire des parties 218 et 219, la surface d'appui 207 de la première enveloppe 211 comportant une gorge axiale 206 apte à recevoir un joint d'étanchéité qui sera comprimé lors du montage de la vanne motorisée instrumentée 200 sur l'application.

La conduite de gaz 202 est étanchéifiée au niveau de la zone de contact entre les parties 218 et 219 par l'insertion d'un élément d'étanchéité 221, un joint de forme par exemple, pris axialement selon (d1) en sandwich entre la surface plane 222 de la première enveloppe 211 et la surface plane 220 de la deuxième enveloppe 213 ou pris radialement selon (d1) en sandwich entre la surface périphérique 233 de la première enveloppe 211 et la surface périphérique 234 de la deuxième enveloppe 213

Afin de fermer de manière étanche la base de l'interface 215 pour la fixation et l'intégration d'un capteur d'état du système (non représenté sur la figure) orientée selon un axe sensiblement parallèle à l'axe de la conduite de gaz 202, la première enveloppe 211 présente une excroissance 223 dont la forme est complémentaire à la forme de la base de l'interface 215. L'excroissance 223 est localisée en périphérie de la partie 218 au niveau des surfaces 222 et 233 venant en contact sur l'élément d'étanchéité 221. L'élément d'étanchéité 221 apporte non seulement la fonction d'étanchéité entre la partie 218 et la partie 219 de la conduite des gaz 202 mais il réalise également l'étanchéité de l'interface capteur 215.

La figure 4 représente, respectivement à la figure3, une vue en coupe partielle d'une vanne motorisée instrumentée 200 selon l'invention. La première interface 215 pour la fixation et l'intégration d'un premier capteur d'état du système (non représenté sur la figure) orientée selon un axe (d2) sensiblement parallèle à l'axe (d1) de la conduite de gaz 202 débouche à l'intérieur de la conduite des gaz 202 au niveau d'une première lumière d'accès 224. Cette première lumière d'accès 224 est localisée à l'interface entre la partie 218 de la première enveloppe 211 et la partie 219 de la deuxième enveloppe 213. Cette première lumière d'accès 224, orientée selon une direction principale (d4) sensiblement orthogonale à l'axe (d1) définissant la conduite de gaz 202 et sensiblement orthogonale à l'axe (d2) définissant la première interface capteur 215, est obtenue grâce à l'excroissance 223 appartenant à la première enveloppe 211. L'excroissance 223 comporte une première surface 222 périphérique et axiale relativement à (d2) venant en contact sur l'élément d'étanchéité 221 pour le comprimer contre la surface plane 220 de la deuxième enveloppe 213, une deuxième surface 226 périphérique et axiale relativement à (d2) venant en contact sur la surface plane 220 de la deuxième enveloppe 213, une troisième surface 227 périphérique et axiale relativement à (d2) permettant de boucher et fermer ainsi de manière étanche la base ouverte de la première interface capteur 215. Dans un mode de réalisation alternatif, l'élément d'étanchéité 221 n'est pas en contact avec les surfaces 222 et 220, il n'est pas axialement comprimé selon une direction (d2). Afin d'assurer un bon niveau d'étanchéité entre les deux enveloppes 211 - 213, l'élément d'étanchéité 221 est alors, relativement à (d1) et (d2), radialement comprimé entre la surface périphérique 233 de la première enveloppe 211 et la surface périphérique 234 de la deuxième enveloppe 213.

La deuxième interface 216 (non visible sur la figure) pour l'intégration d'un deuxième capteur d'état du système (non représenté sur la figure), orientée selon un axe (d3) sensiblement orthogonal à l'axe (d1) définissant la conduite des gaz 202 débouche à l'intérieur de la conduite des gaz 202 au niveau d'une deuxième lumière 225. Cette deuxième lumière d'accès 225, orientée selon une direction (d3) définissant la deuxième interface capteur 216 est localisée au niveau de la partie 219 de la deuxième enveloppe 213.

Les première et deuxième lumières d'accès 224 - 225 permettent ainsi un contact entre les éléments sensibles des capteurs d'état du système (non représentés sur la figure) fixés sur les interfaces 215 - 216 et le fluide circulant à l'intérieur de la conduite 202.

La figure 5 représente, relativement à la figure 4, une vue de trois quart en coupe partielle de la deuxième enveloppe 213 d'une vanne motorisée instrumentée 200 selon l'invention. L'élément d'étanchéité 221 entre la première enveloppe 211 et la deuxième enveloppe 213 est ici solidaire de la deuxième enveloppe 213. Il s'agit d'un élastomère fixé sur la surface plane 220 et sur la surface périphérique 234, obtenu par un procédé de moulage de type bi-injection.

La deuxième interface 216 pour l'intégration d'un deuxième capteur d'état du système (non représenté sur la figure), orientée selon un axe (d3) sensiblement orthogonal à l'axe (d1) définissant la conduite des gaz 202 présente une forme axisymétrique. La deuxième interface 216 intègre un insert métallique 229 de forme cylindrique dont la surface intérieure est filetée pour permettre la fixation du capteur par vissage. L'insert métallique 229 peut être directement surmoulé avec la deuxième enveloppe 213 ou simplement rapporté et emmanché dans l'interface 216. Pour assurer une bonne étanchéité entre le capteur (non représenté sur la figure) et la deuxième enveloppe 213, la longueur de l'insert métallique 229 doit être, selon une direction (d3), strictement inférieure à la longueur de l'interface 216. Un jeu fonctionnel 230 assure ainsi au capteur de venir en contact directement avec l'interface 216 et interdit tout contact, selon une direction (d3), avec l'insert 229. Dans un mode de réalisation alternatif, l'insert métallique 229 peut être supprimé, la broche de l'outillage d'injection réalisant la partie intérieure de l'interface 216 doit alors avoir un mouvement hélicoïdal pour sortir de la deuxième enveloppe 213 et réaliser ainsi le filetage nécessaire à la fixation du capteur. Si la broche de l'outillage d'injection présente un mouvement de translation pure, alors le capteur doit être muni d'un filetage auto-taraudant pour venir se fixer correctement par vissage dans l'interface 216.

La deuxième enveloppe 213 est également munie de moyen de fixation mécanique sur l'application sous la forme d'oreilles plastiques 204a - 204b - 204c. Afin de rigidifier le montage sur l'application, des inserts métalliques 214a - 214b - 214c sont logés dans chaque oreille. Les inserts 214a - 214b - 214c peuvent être directement surmoulés avec la deuxième enveloppe 213 ou simplement rapportés et emmanchés dans les oreilles 204a - 204b - 204c. Selon une direction (d1), les inserts métalliques 214a - 214b - 214c présentent une longueur axiale strictement supérieure à la longueur des oreilles de fixation 204a - 204b - 204c. Les inserts métalliques 214a - 214b - 214c peuvent ainsi traverser les oreilles 217a - 217b - 217c de la première enveloppe 211 pour d'une part centrer la deuxième enveloppe 213 et d'autre part venir directement en contact sur la face de l'application en contact avec la face 207 de la première enveloppe 211. Les inserts 214a - 214b - 214c reprennent ainsi efficacement les efforts de traction des vis de montage (non représentées sur la figure) et évitent ainsi aux paires d'oreilles 217a/204a - 217b/204b - 217c/204c de subir des déformations irréversibles, notamment par fluage.

Au niveau des zones de contacts, les surfaces 228a - 228b - 228c des oreilles 204a - 204b - 204c de la deuxième enveloppe 213 vont venir, selon une direction (d1) en contact avec les oreilles 217a - 217b - 217c de la première enveloppe 211 au niveau de la surface 232. Selon une direction (d1), la surface 231 reliant les oreilles 204a - 204b - 204c de la deuxième enveloppe 213 se trouve dans un plan en retrait par rapport aux surfaces 228a - 228b - 228c. La surface 231 n'est par conséquent par une surface fonctionnelle, la surface 231 n'a aucun contact avec la première enveloppe 211. La surface plane 220 de la deuxième enveloppe 213, en contact avec l'élément d'étanchéité 221, peut venir en contact avec la deuxième surface périphérique et axiale 226 de la première enveloppe 211. Cette surface plane 220 se trouve, selon une direction (d1), dans un plan en retrait par rapport à la surface non fonctionnelle 231.

La figure 6A représente, selon la figure 5, une vue de face selon un axe (d1) de la deuxième enveloppe 213 d'une vanne motorisée instrumentée 200 selon l'invention. Pour faciliter la fabrication de la deuxième enveloppe 213, notamment au travers d'un outillage d'injection simple et robuste, les droites (d4) définissant l'orientation de la première lumière d'accès 224 de la première interface capteur 215 et (d3) définissant l'orientation de la deuxième lumière d'accès 225 de la deuxième interface capteur 216 sont disposées de manière orthogonale. La direction (d3) est alors une première direction principale de fermeture selon les flèches F1.1 et d'ouverture selon les flèches F1.2 du moule d'injection réalisant la deuxième enveloppe 213, un plan de joint étant localisé en partie sur la droite (d4) au niveau de la première interface capteur 215.

La figure 6B représente, selon la figure 5, une vue de côté selon un axe (d3) de la deuxième enveloppe 213 d'une vanne motorisée instrumentée 200 selon l'invention. Pour faciliter la fabrication de la deuxième enveloppe 213, notamment au travers d'un outillage d'injection simple et robuste, les droites (d1) définissant l'orientation de la conduite des gaz 202 et (d2) définissant l'orientation de la première interface capteur 215 sont disposées de manière parallèle, un plan de joint orthogonal à la droite (d1) étant localisé en partie au niveau de la deuxième interface capteur 216. La direction (d1) est alors une deuxième direction principale de fermeture selon les flèches F2.1 et d'ouverture selon les flèches F2.2 du moule d'injection réalisant la deuxième enveloppe 213. Les première et deuxième directions principales de fermeture et d'ouverture du moule d'injection réalisant la deuxième enveloppe 213 sont disposées de manière orthogonale.

## Revendications

1. Vanne motorisée instrumentée (200) comportant un corps de vanne en matière plastique, ledit corps de vanne formant un conduit (202), ladite vanne (200) comportant un actionneur (201) apte à déplacer un élément d'obturation (205) dans ledit conduit (202), ledit corps de vanne intégrant également des interfaces (215 - 216) pour la fixation de capteurs d'état du système, lesdits capteurs d'état étant en contact direct avec le fluide circulant dans ledit conduit (202), ledit corps de vanne intégrant aussi des éléments de fixation mécanique (217a/204a - 217b/204b - 217c/204c) sur l'application **caractérisée en ce que** ledit corps de vanne est constitué de deux enveloppes distinctes et complémentaires (211 - 213), **en ce qu'**une première enveloppe (211) comporte ledit actionneur (201), ledit élément d'obturation 205, lesdits éléments de fixation mécanique (217a - 217b - 217c) de ladite vanne motorisée (200) sur l'application et une partie (223) de l'interface (215) pour la fixation d'au moins un des capteurs d'état du système, **en ce qu'**une deuxième enveloppe (213) comporte lesdits éléments de fixation mécanique (204a - 204b - 204c) de ladite vanne motorisée (200) sur l'application et le reste des interfaces (215 - 216) pour la fixation des capteurs d'état du système, et **en ce que** ledit conduit (202) est en deux parties distinctes (218 - 219) appartenant chacune à la première enveloppe (211) et à la deuxième enveloppe (213).

2. Vanne motorisée instrumentée selon la revendication 1 **caractérisée en ce qu'**un élément (221) apte à étanchéifier le conduit (202) est placé à l'interface entre la première enveloppe (211) et deuxième enveloppe (213).

3. Vanne motorisée instrumentée selon la revendication 2 **caractérisée en ce que** l'élément d'étanchéité (221) est un joint de forme rapporté.

4. Vanne motorisée instrumentée selon la revendication 2 **caractérisée en ce que** l'élément d'étanchéité (221) est un élastomère appartenant à la deuxième enveloppe (213) et **en ce que** l'élastomère est obtenu par un procédé de bi-injection.

5. Vanne motorisée instrumentée -selon l'une au moins des revendications précédentes **caractérisée en ce que** lesdits éléments de fixation mécanique (217a/204a - 217b/204b - 217c/204c) comportent des inserts métalliques (214a - 214b - 214c) traversant la première enveloppe (211) et la deuxième enveloppe (213).

6. Vanne motorisée instrumentée selon la revendication 5 **caractérisée en ce que** lesdits inserts métalliques (214a - 214b - 214c) sont rapportés et emmanchés dans la deuxième enveloppe (213).

7. Vanne motorisée instrumentée selon la revendication 5 **caractérisée en ce que** lesdits inserts métalliques (214a - 214b - 214c) sont surmoulés avec la deuxième enveloppe (213).

8. Vanne motorisée instrumentée selon l'une au moins des revendications précédentes **caractérisée en ce qu'**elle comporte au minimum deux interfaces (215 - 216) pour la fixation d'au moins deux capteurs d'état du système.

9. Vanne motorisée instrumentée selon la revendication précédente **caractérisée en ce que** les interfaces (215 - 216) pour la fixation des capteurs sont monoblocs et d'un seul tenant avec la deuxième enveloppe (213).

10. Vanne motorisée instrumentée selon la revendication 9 **caractérisée en ce qu'**une première interface (215) pour la fixation d'un premier capteur est orientée selon une direction (d2) parallèle à l'axe (d1) du conduit (202) et **en ce que** la lumière d'accès (224) de la première interface de fixation (215) au conduit (202) est orientée selon une direction (d4) orthogonale à l'axe (d1) du conduit (202).

11. Vanne motorisée instrumentée selon la revendication 10 **caractérisée en ce que** la première interface (215) pour la fixation d'un premier capteur appartient en partie à la première enveloppe (211) et en partie à la deuxième enveloppe (213).

12. Vanne motorisée instrumentée selon la revendication 11 **caractérisée en ce que** la partie de la première interface (215) pour la fixation d'un premier capteur appartenant à la première enveloppe (211) est une excroissance (223) localisée en périphérie du conduit (202).

13. Vanne motorisée instrumentée selon les revendications 2 et 12 **caractérisée en ce que** l'élément d'étanchéité (221) réalise également l'étanchéité entre l'excroissance (223) appartenant à la première enveloppe (211) et la partie de la première interface (215) pour la fixation d'un premier capteur appartenant à la deuxième enveloppe (213).

14. Vanne motorisée instrumentée selon la revendication 9 **caractérisée en ce qu'**une deuxième interface (216) pour la fixation d'un deuxième capteur est orientée selon une direction (d3) orthogonale à l'axe (d1) du conduit (202) et **en ce que** la lumière d'accès (225) de l'interface de fixation (216) au conduit (202) est orientée selon une même direction (d3) orthogonale à l'axe (d1) du conduit (202).

15. Vanne motorisée instrumentée selon la revendication 14 **caractérisée en ce que** la deuxième interface (216) pour la fixation d'un deuxième capteur appartient intégralement à la deuxième enveloppe (213).

16. Vanne motorisée instrumentée selon la revendication 14 **caractérisée en ce que** la deuxième interface (216) pour la fixation d'un deuxième capteur intègre un insert métallique (229) rapporté ou directement surmoulé avec la deuxième enveloppe (213) et **en ce que** l'insert métallique 229 comprend un élément fileté.

17. Procédé pour la réalisation d'une vanne motorisée instrumentée selon la revendication 14 **caractérisée en ce que** la deuxième interface (216) pour la fixation d'un deuxième capteur comprend un élément fileté réalisé par injection via un mouvement hélicoïdal de sortie de la broche de l'outillage.

18. Procédé pour la réalisation d'une vanne motorisée instrumentée selon les revendications 10 et 14 **caractérisée en ce que** la deuxième enveloppe (213) est réalisée par un outillage d'injection comportant deux directions principales de fermeture et d'ouverture, **en ce qu'**une première des directions principales est l'axe (d1) du conduit (202), **en ce qu'**une deuxième des directions principales est un axe (d3) définissant une des interfaces (216) de fixation d'un capteur et **en ce que** les deux directions principales sont orthogonales.

## Patentansprüche

1. Instrumentiertes motorisiertes Ventil (200), das einen Ventilkörper aus Kunststoffmaterial aufweist, wobei der Ventilkörper eine Leitung (202) ausbildet, wobei das Ventil (200) einen Aktuator (201) aufweist, der geeignet ist, um ein Verschlusselement (205) in der Leitung (202) zu bewegen, wobei der Ventilkörper auch Grenzflächen (215 - 216) für die Befestigung von Systemstatussensoren integriert, wobei die Statussensoren in direktem Kontakt mit dem Fluid stehen, das in der Leitung (202) zirkuliert, wobei der Ventilkörper auch mechanische Befestigungselemente (217a/204a - 217b/204b - 217c/204c) auf der Anwendung integriert, **dadurch gekennzeichnet, dass** der Ventilkörper aus zwei unterschiedlichen und komplementären Verkleidungen (211 - 213) besteht, dass eine erste Verkleidung (211) den Aktuator (201), das Verschlusselement 205, die mechanischen Befestigungselemente (217a - 217b - 217c) des motorisierten Ventils (200) auf der Anwendung und einen Teil (223) der Grenzfläche (215) für die Befestigung von mindestens einem der Systemzustandssensoren aufweist, dass eine zweite Verkleidung (213) die mechanischen Befestigungselemente (204a - 204b - 204c) des motorisierten Ventils (200) auf der Anwendung und den Rest der Grenzflächen (215 - 216) für die Befestigung der Systemzustandssensoren aufweist, und dass die Leitung (202) aus zwei unterschiedlichen Teilen (218 - 219) besteht, die jeweils zu der ersten Verkleidung (211) und zu der zweiten Verkleidung (213) gehören.

2. Instrumentiertes motorisiertes Ventil nach Anspruch 1, **dadurch gekennzeichnet, dass** ein Element (221), das geeignet ist, um die Leitung (202) abzudichten, an der Grenzfläche zwischen der ersten Verkleidung (211) und der zweiten Verkleidung (213) angeordnet ist.

3. Instrumentiertes motorisiertes Ventil nach Anspruch 2, **dadurch gekennzeichnet, dass** das Abdichtungselement (221) eine angesetzte Formdichtung ist.

4. Instrumentiertes motorisiertes Ventil nach Anspruch 2, **dadurch gekennzeichnet, dass** das Abdichtungselement (221) ein Elastomer ist, das zu der zweiten Verkleidung (213) gehört, und dass das Elastomer durch ein Bi-Injektionsverfahren erhalten wird.

5. Instrumentiertes motorisiertes Ventil nach mindestens einem der vorstehenden Ansprüche, **dadurch gekennzeichnet, dass** die mechanischen Befestigungselemente (217a/204a - 217b/204b - 217c/204c) Metalleinsätze (214a - 214b - 214c) aufweisen, die die erste Verkleidung (211) und die zweite Verkleidung (213) durchdringen.

6. Instrumentiertes motorisiertes Ventil nach Anspruch 5, **dadurch gekennzeichnet, dass** die Metalleinsätze (214a - 214b - 214c) in der zweiten Verkleidung (213) angesetzt und eingepasst sind.

7. Instrumentiertes motorisiertes Ventil nach Anspruch 5, **dadurch gekennzeichnet, dass** die Metalleinsätze (214a - 214b - 214c) mit der zweiten Verkleidung (213) umspritzt sind.

8. Instrumentiertes motorisiertes Ventil nach mindestens einem der vorstehenden Ansprüche, **dadurch gekennzeichnet, dass** es mindestens zwei Grenzflächen (215 - 216) für die Befestigung von mindestens zwei Systemzustandssensoren aufweist.

9. Instrumentiertes motorisiertes Ventil nach dem vorstehenden Anspruch, **dadurch gekennzeichnet, dass** die Grenzflächen (215 - 216) für die Befestigung der Sensoren aus einem Guss und in einem Stück mit der zweiten Verkleidung (213) sind.

10. Instrumentiertes motorisiertes Ventil nach Anspruch 9, **dadurch gekennzeichnet, dass** eine erste Grenzfläche (215) für die Befestigung eines ersten Sensors in einer Richtung (d2) parallel zu der Achse (d1) der Leitung (202) ausgerichtet ist, und dass der Zugangskanal (224) der ersten Befestigungsgrenzfläche (215) zu der Leitung (202) in einer Richtung (d4) orthogonal zu der Achse (d1) der Leitung (202) ausgerichtet ist.

11. Instrumentiertes motorisiertes Ventil nach Anspruch 10, **dadurch gekennzeichnet, dass** die erste Grenzfläche (215) für die Befestigung eines ersten Sensors teilweise zu der ersten Verkleidung (211) und teilweise zu der zweiten Verkleidung (213) gehört.

12. Instrumentiertes motorisiertes Ventil nach Anspruch 11, **dadurch gekennzeichnet, dass** der Teil der ersten Grenzfläche (215) für die Befestigung eines ersten Sensors, der zu der ersten Verkleidung (211) gehört, ein Vorsprung (223) ist, der sich an einem Umfang der Leitung (202) befindet.

13. Instrumentiertes motorisiertes Ventil nach den Ansprüchen 2 und 12, **dadurch gekennzeichnet, dass** das Abdichtungselement (221) auch zwischen dem Vorsprung (223), der zu der ersten Verkleidung (211) gehört, und dem Teil der ersten Grenzfläche (215) für die Befestigung eines ersten Sensors, der zu der zweiten Verkleidung (213) gehört, die Abdichtung herstellt.

14. Instrumentiertes motorisiertes Ventil nach Anspruch 9, **dadurch gekennzeichnet, dass** eine zweite Grenzfläche (216) für die Befestigung eines zweiten Sensors in einer Richtung (d3) orthogonal zu der Achse (d1) der Leitung (202) ausgerichtet ist, und dass der Zugangskanal (225) der Befestigungsschnittstelle (216) zu der Leitung (202) in einer gleichen Richtung (d3) orthogonal zu der Achse (d1) der Leitung (202) ausgerichtet ist.

15. Instrumentiertes motorisiertes Ventil nach Anspruch 14, **dadurch gekennzeichnet, dass** die zweite Grenzfläche (216) für die Befestigung eines zweiten Sensors vollständig zu der zweiten Verkleidung (213) gehört.

16. Instrumentiertes motorisiertes Ventil nach Anspruch 14, **dadurch gekennzeichnet, dass** die zweite Grenzfläche (216) für die Befestigung eines zweiten Sensors einen Metalleinsatz (229) integriert, der an der zweiten Verkleidung (213) angesetzt oder direkt damit umspritzt ist, und dass der Metalleinsatz 229 ein Gewindeelement umfasst.

17. Verfahren für das Herstellen eines instrumentierten motorisierten Ventils nach Anspruch 14, **dadurch gekennzeichnet, dass** die zweite Grenzfläche (216) für die Befestigung eines zweiten Sensors ein Gewindeelement umfasst, das durch Injektion über eine schraubenförmige Ausfahrbewegung der Spindel des Werkzeugs hergestellt wird.

18. Verfahren für das Herstellen eines instrumentierten motorisierten Ventils nach den Ansprüchen 10 und 14, **dadurch gekennzeichnet, dass** die zweite Verkleidung (213) durch ein Injektionswerkzeug hergestellt wird, das zwei Hauptrichtungen eines Sperrens und eines Öffnens aufweist, dass eine erste der Hauptrichtungen die Achse (d1) der Leitung (202) ist, dass eine zweite der Hauptrichtungen eine Achse (d3) ist, die eine der Grenzflächen (216) zum Befestigen eines Sensors definiert, und dass die zwei Hauptrichtungen orthogonal sind.

## Claims

1. Instrumented motorized valve (200) comprising a valve body made of plastics material, said valve body forming a duct (202), said valve (200) comprising an actuator (201) suitable for moving a closure element (205) in said duct (202), said valve body also including interfaces (215 - 216) for fastening system status sensors, said status sensors being in direct contact with the fluid flowing in said duct (202), said valve body also including elements (217a/204a - 217b/204b - 217c/204c) for mechanical fastening to the application, **characterized in that** said valve body consists of two separate and complementary housings (211 - 213), **in that** a first housing (211) comprises said actuator (201), said closure element 205, said elements (217a - 217b - 217c) for mechanically fastening said motorized valve (200) to the application and a part (223) of the interface (215) for fastening at least one of the system status sensors, **in that** a second housing (213) includes said elements (204a - 204b - 204c) for mechanically fastening said motorized valve (200) to the application and the rest of the interfaces (215 - 216) for fastening the system status sensors, and **in that** said duct (202) is in two separate parts (218 - 219), each belonging to the first housing (211) and to the second housing (213).

2. Instrumented motorized valve according to claim 1, **characterized in that** an element (221) suitable for sealing the duct (202) is located at the interface between the first housing (211) and the second housing (213).

3. Instrumented motorized valve according to claim 2, **characterized in that** the sealing element (221) is a seal in attached form.

4. Instrumented motorized valve according to claim 2, **characterized in that** the sealing element (221) is an elastomer belonging to the second housing (213) and **in that** the elastomer is obtained by a bi-injection process.

5. Instrumented motorized valve according to at least one of the preceding claims, **characterized in that** said mechanical fastening elements (217a/204a - 217b/204b-217c/204c) comprise metal inserts (214a - 214b - 214c) which pass through the first housing (211) and the second housing (213).

6. Instrumented motorized valve according to claim 5, **characterized in that** said metal inserts (214a - 214b - 214c) are attached and fitted into the second housing (213).

7. Instrumented motorized valve according to claim 5, **characterized in that** said metal inserts (214a - 214b - 214c) are overmolded with the second housing (213).

8. Instrumented motorized valve according to at least one of the preceding claims, **characterized in that** it comprises at least two interfaces (215 - 216) for fastening at least two system status sensors.

9. Instrumented motorized valve according to the preceding claim, **characterized in that** the interfaces (215 - 216) for fastening the sensors are one-piece and integral with the second housing (213).

10. Instrumented motorized valve according to claim 9, **characterized in that** a first interface (215) for fastening a first sensor is oriented in a direction (d2) parallel to the axis (d1) of the duct (202) and **in that** the access opening (224) of the first fastening interface (215) to the duct (202) is oriented in a direction (d4) orthogonal to the axis (d1) of the duct (202).

11. Instrumented motorized valve according to claim 10, **characterized in that** the first interface (215) for fastening a first sensor belongs partly to the first housing (211) and partly to the second housing (213).

12. Instrumented motorized valve according to claim 11, **characterized in that** the part of the first interface (215) for fastening a first sensor belonging to the first housing (211) is a protrusion (223) located on the periphery of the duct (202).

13. Instrumented motorized valve according to claims 2 and 12, **characterized in that** the sealing element (221) also seals between the protrusion (223) belonging to the first housing (211) and the part of the first interface (215) for fastening a first sensor belonging to the second housing (213).

14. Instrumented motorized valve according to claim 9, **characterized in that** a second interface (216) for fastening a second sensor is oriented in a direction (d3) orthogonal to the axis (d1) of the duct (202) and **in that** the access opening (225) of the fastening interface (216) to the duct (202) is oriented in the same direction (d3) orthogonal to the axis (d1) of the duct (202).

15. Instrumented motorized valve according to claim 14, **characterized in that** the second interface (216) for fastening a second sensor belongs entirely to the second housing (213).

16. Instrumented motorized valve according to claim 14, **characterized in that** the second interface (216) for fastening a second sensor includes a metal insert (229) attached to or directly overmolded with the second housing (213) and **in that** the metal insert 229 comprises a threaded element.

17. Method for producing an instrumented motorized valve according to claim 14, **characterized in that** the second interface (216) for fastening a second sensor comprises a threaded element produced by injection via a helical output movement of the spindle of the machine.

18. Method for producing an instrumented motorized valve according to claims 10 and 14, **characterized in that** the second housing (213) is produced by an injection machine having two main directions of closing and opening, **in that** a first of the main directions is the axis (d1) of the duct (202), **in that** a second of the main directions is an axis (d3) defining one of the interfaces (216) for fastening a sensor, and **in that** the two main directions are orthogonal.
